(19) Europäisches Patentamt
European Patent Office
Office européen des brevets

(11) Veröffentlichungsnummer: **0 558 987 A2**

(12) # EUROPÄISCHE PATENTANMELDUNG

(21) Anmeldenummer: **93102374.1**

(22) Anmeldetag: **16.02.93**

(51) Int. Cl.$^5$: **C08F 210/16**, C08F 2/34, C08F 2/40

(30) Priorität: **29.02.92 DE 4206367**

(43) Veröffentlichungstag der Anmeldung: **08.09.93 Patentblatt 93/36**

(84) Benannte Vertragsstaaten: **BE DE ES FR GB IT NL**

(71) Anmelder: **BASF Aktiengesellschaft**
**Carl-Bosch-Strasse 38**
**D-67063 Ludwigshafen(DE)**

(72) Erfinder: **Kersting, Meinolf, Dr.**
**Friedelsheimer Strasse 12**
**W-6702 Bad Duerkheim(DE)**
Erfinder: **Hungenberg, Klaus-Dieter, Dr.**
**Ortsstrasse 135**
**W-6943 Birkenau(DE)**
Erfinder: **Mueller, Patrik, Dr.**
**Johanniskreuzerstrasse 67**
**W-6750 Kaiserslautern(DE)**
Erfinder: **Koelle, Peter, Dr.**
**An der Froschlache 19**
**W-6700 Ludwigshafen(DE)**

(54) **Verfahren zur Herstellung von Propylen-Ethylen-Copolymerisaten.**

(57) Verfahren zur Herstellung von Propylen-Ethylen-Copolymerisaten durch zweistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält, wobei man als Ziegler-Natta-Katalysatorsystem ein solches verwendet, das nach Umsetzung der titanhaltigen Feststoffkomponente mit dem Cokatalysator einer Vorpolymerisation mit einem $\alpha$-Olefin unterworfen wird, bis ein Massenverhältnis von 0,1 bis 30 Teilen polymerisiertem $\alpha$-Olefin pro Teil Katalysator erreicht ist und anschließend das vorpolymerisierte Katalysatorsystem durch Reaktion mit Kohlendioxid inaktiviert wird.

EP 0 558 987 A2

Die vorliegende Erfindung betrifft ein neues Verfahren zur Herstellung von Propylen-Ethylen-Copolymerisaten durch zweistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält.

Außerdem betrifft die Erfindung Propylen-Ethylen-Copolymerisate, die nach diesem Verfahren erhältlich sind, deren Verwendung zur Herstellung von Fasern, Folien und Formkörpern sowie Fasern, Folien und Formkörper aus diesen Propylen-Ethylen-Copolymerisaten als wesentliche Komponente.

Verfahren zur Herstellung von Propylen-Ethylen-Blockcopolymerisaten mit Hilfe eines Ziegler-Natta-Katalysatorsystems sind bereits in einer Reihe von Patentschriften beschrieben worden, z.B. in der US-A 4 454 299 und in der US-A 4 455 405. Die dabei erhältlichen Copolymerisate weisen jedoch eine recht hohe Neigung zum Weißbruch auf, wobei man unter Weißbruch die an vielen Kunststoffen in einzelnen Bereichen auftretende Weißfärbung der vorher transparenten Proben während der Verstreckung versteht.

In der EP-A 282 341 wird ein Ziegler-Natta-Katalysatorsystem beschrieben, das durch Vorpolymerisation eine hohe Produktivität erhält.

Der Erfindung lag die Aufgabe zugrunde ein Verfahren zur Herstellung von Propylen-Ethylen-Copolymerisaten zur Verfügung zu stellen, wobei Copolymerisate mit guten mechanischen Eigenschaften und guter Morphologie erhalten werden.

Diese Aufgabe wird erfindungsgemäß dadurch gelöst, daß man als Ziegler-Natta-Katalysatorsystem ein solches verwendet, das nach Umsetzung der titanhaltigen Feststoffkomponente mit dem Cokatalysator einer Vorpolymerisation mit einem $\alpha$-Olefin unterworfen wird, bis ein Massenverhältnis von 0,1 bis 30 Teilen polymerisiertem $\alpha$-Olefin pro Teil Katalysator erreicht ist und anschließend das vorpolymerisierte Katalysatorsystem durch Reaktion mit Kohlendioxid inaktiviert wird.

Das erfindungsgemäße Verfahren kann in den üblichen, für die Polymerisation von Olefinen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate gut bewährt haben. Als besonders bevorzugter Träger wird $SiO_2 \cdot aAl_2O_3$ verwendet, wobei a für einen Wert von 0 bis 2, insbesondere von 0 bis 0,5 steht.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi- ($C_1$- bis $C_{10}$-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

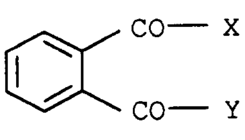

I

verwendet, wobei X und Y jeweils für ein Chloratom oder einen $C_1$- bis $C_{10}$-Alkoxyrest oder gemeinsam für Sauerstoff stehen. Besonders bevorzugte Elektronendonorverbindungen sind Phthalsäureester, wobei X und

Y einen $C_1$- bis $C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren der allgemeinen Formeln IIa bzw. IIb, sowie Monoester von gegebenenfalls substituierten Benzophenon-2-carbonsäuren der allgemeinen Formel III

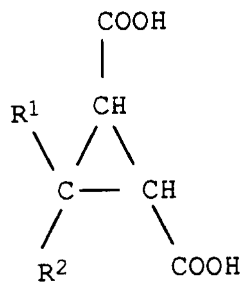

IIa

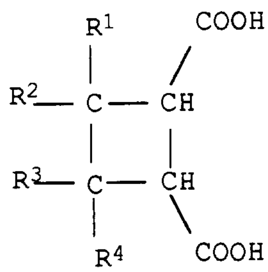

IIb

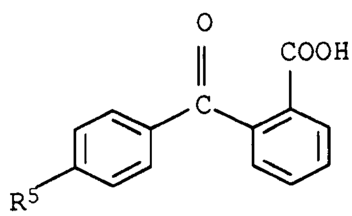

III

$R^1$, $R^2$, $R^3$ und $R^4$ können in den obigen Formeln unabhängig voneinander ein Wasserstoffatom, eine $C_1$- bis $C_{15}$-Alkylgruppe, eine $C_7$- bis $C_{15}$-Alkylarylgruppe oder eine 5- bis 7-gliedrige Cycloalkylgruppe, die ihrerseits $C_1$- bis $C_{10}$-Alkylgruppen tragen kann bedeuten, $R^5$ kann in der Formel III ein Wasserstoffatom, eine $C_1$- bis $C_5$-Alkylgruppe oder ein Chloratom bedeuten.

Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200 und der GB-A 2 111 066 beschrieben.

Bei der Herstellung der titanhaltigen Feststoffkomponente wird bevorzugt folgendes zweistufige Verfahren angewandt:

In der ersten Stufe versetzt man zunächst einen feinteiligen Träger, bevorzugt $SiO_2 \cdot aAl_2O_3$ - wobei a für eine Zahl im Bereich von 0 bis 2, insbesondere im Bereich von 0 bis 0,5 steht - der in der Regel einen Teilchendurchmesser von 0,1 bis 1000 $\mu$m, insbesondere von 10 bis 300 $\mu$m, ein Porenvolumen von 0,1 bis 10 $cm^3$/g, insbesondere von 1,0 bis 4,0 $cm^3$/g, und eine spezifische Oberfläche von 10 bis 1000 $m^2$/g, insbesondere von 100 bis 500 $m^2$/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff` insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur zwischen 10 und 150 °C ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, des drei- oder vierwertigen Titans und 0,01 bis 1 mol, insbesondere 0,1 bis 0,5 mol, der Elektronendonorverbindung ein. Dieses Gemisch wird wenigstens eine Stunde lang bei einer Temperatur im Bereich von 10 bis 150 °C gerührt, der so erhaltene feste Stoff anschließend abfiltriert und mit einem $C_7$- bis $C_{10}$-Alkylbenzol, bevorzugt mit Ethylbenzol, gewaschen.

In der zweiten Stufe extrahiert man den aus der ersten Stufe erhaltenen Feststoff einige Stunden lang bei Temperaturen im Bereich von 100 bis 150 °C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel IV

$$R^6{}_nSi(OR^7)_{4-n} \qquad IV$$

wobei
$R^6$ eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe, $R^7$ eine $C_1$- bis $C_{20}$-Alkylgruppe bedeutet und n für die Zahlen 1, 2 oder 3 steht. Besonders bevorzugt werden dabei solche Verbindungen, in denen $R^6$ eine $C_1$- bis $C_8$-Alkylgruppe oder eine 5- bis 7-gliedrige Cycloalkylgruppe, sowie $R^7$ eine $C_1$-bis $C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Die einzelnen Katalysatorbestandteile können in beliebiger Reihenfolge einzeln oder als Gemisch zweier Komponenten in das Polymerisationssystem eingebracht werden.

Die Herstellung der verwendeten Ziegler-Natta-Katalysatorsysteme erfolgt in der Regel dadurch, daß man zunächst die titanhaltige Feststoffkomponente mit dem Cokatalysator umsetzt. Die Umsetzung erfolgt zweckmäßigerweise in der flüssigen Phase. Wenn der Cokatalysator bei der Reaktionstemperatur als Flüssigkeit vorliegt kann mit oder ohne Lösungsmittel gearbeitet werden. Liegt der Cokatalysator bei der Reaktionstemperatur als Feststoff vor, empfiehlt sich die Verwendung eines inerten Lösungsmittels.

Als Lösungsmittel sind flüssige Kohlenwasserstoffe, bevorzugt $C_5$- bis $C_{10}$-Alkane, besonders bevorzugt Hexan oder Heptan, oder Gemische aus Kohlenwasserstoffen geeignet.

Der Cokatalysator wird bei einer Temperatur von -20 bis 60 °C, bevorzugt bei 0 bis 25 °C, mit der titanhaltigen Feststoffkomponente umgesetzt. Dazu wird die titanhaltige Feststoffkomponente zweckmäßigerweise im Cokatalysator oder in der Cokatalysator-Lösung suspendiert.

Bevorzugt werden solche Gemische verwendet, bei denen das Molverhältnis von Aluminiumverbindung zu Titan aus der titanhaltigen Feststoffkomponente 0,1:1 bis 10:1, insbesonders 1:1 bis 5:1, und das Molverhältnis von Aluminiumverbindung zu siliciumorganischer Verbindung 0,1:1 bis 200:1, insbesondere 3:1 bis 30:1 beträgt.

Die Reaktionsdauer für die Umsetzung beträgt bis zu drei Stunden, bevorzugt bis 30 Minuten.

Anschließend erfolgt die Vorpolymerisation des Katalysatorsystems, indem man ein α-Olefin, bevorzugt ein gasförmiges α-Olefin, zum Katalysator zugibt. Hierbei hat es sich als geeignet erwiesen, entweder Propylen oder auch ein Gemisch aus Propylen und Ethylen, in einem Mengenverhältnis, das dem des gewünschten Produkts entspricht, einzusetzen.

Die Vorpolymerisation erfolgt solange, bis ein Massenverhältnis von 0,1 bis 30 Teilen, bevorzugt von 0,1 bis 5 Teilen polymerisiertem α-Olefin pro Teil titanhaltiger Feststoffkomponente vor der Polymerisation erreicht ist.

Da Ziegler-Natta-Katalysatorsysteme anfangs in der Regel eine lineare Aktivitäts-Zeitkurve aufweisen, läßt sich die Polymerbeladung des Katalysators bei kontinuierlicher α-Olefin-Einleitung über die Einleitungszeit gut steuern. Die Reaktionszeit ist abhängig von der Temperatur und dem angewandten Druck. Bei Raumtemperatur und einem Druck von 1 bar beträgt sie üblicherweise zwischen einigen Minuten und mehreren Stunden.

Die Vorpolymerisation kann bei den gleichen Temperaturen, wie die Umsetzung der titanhaltigen Feststoffkomponente mit dem Cokatalysator erfolgen.

Die Reaktion kann jedoch auch bei höherem Druck oder tieferer Temperatur durchgeführt werden; entsprechend verkürzt bzw. verlängert sich dann die Reaktionszeit.

Die Zuführung der gasförmigen α-Olefine kann mit Normaldruck oder mit erhöhtem Druck erfolgen. Üblicherweise wird ein Gasdruck von 1 bis 7 bar verwendet.

Im Anschluß an die Vorpolymerisation wird das Ziegler-Natta-Katalysatorsystem durch Reaktion mit trockenem Kohlendioxid inaktiviert.

Die Umsetzung erfolgt bei einer Temperatur von -20° bis 60°C, bevorzugt bei 0 bis 25°C. Das Kohlendioxid kann als Gas direkt in die vorpolymerisierte Katalysatorsuspension eingeleitet werden. Kohlendioxid kann auch in fester Form in die vorpolymerisierte Katalysatorsuspension gegeben werden. Es ist aber auch möglich, den Gasraum über der Suspension mit Kohlendioxid anzufüllen, bevorzugt mit einem Druck von 1 bis 30 bar, besonders bevorzugt 1 bis 8 bar. Diese Form der Umsetzung mit Kohlendioxid wird bevorzugt.

Zur schnelleren Umsetzung kann die Katalysatorsuspension während der Reaktion mit Kohlendioxid gerührt werden.

Die Dauer der Umsetzung beträgt üblicherweise bis zu 3 Stunden, bevorzugt wird die Umsetzung in 0,5 bis 3 Stunden durchgeführt.

Durch die Umsetzung mit Kohlendioxid wird das Katalysatorsystem inaktiviert, d. h. es ist in der Regel nicht mehr polymerisationsaktiv. Die so hergestellten Katalysatorsysteme weisen eine gute Lagerstabilität auf. Sie können z. B. als Feststoff aufbewahrt werden.

Vor einem Einsatz in einer Polymerisationsreaktion werden die Katalysatorsysteme durch Umsetzen mit einem Cokatalysator wieder aktiviert.

Als Cokatalysator können die gleichen Verbindungen wie bei der Umsetzung mit der titanhaltigen Feststoffkomponente verwendet werden.

Bevorzugt werden die Cokatalysatoren in einer solchen Menge verwendet, daß das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung un der als Cokatalysator eingesetzten Elektronendonorverbindung 1:1 bis 100:1, insbesondere 2:1 bis 80:1 beträgt.

Die Herstellung der Propylen-Ethylen-Copolymerisate durch zweistufige Polymerisation aus der Gasphase heraus kann dadurch erfolgen, daß in einer ersten Polymerisationsstufe Polypropylen erzeugt wird und anschließend in einer zweiten Stufe ein Gemisch aus Propylen und Ethylen hinzupolymerisiert wird oder, daß schon in der ersten Stufe ein PropylenEthylen-Copolymerisat erzeugt wird, dem in der zweiten Stufe ein Gemisch aus Propylen und Ethylen hinzupolymerisiert wird.

Die Polymerisation wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen so, daß in der ersten Polymerisationszone pro mmol der Aluminiumkomponente 0,05 bis 2 kg, bevorzugt 0,1 bis 1,5 kg Polypropylen bzw. Propylen-Copolymerisat gebildet werden. Bevorzugt wird in der ersten Polymerisationszone das Verhältnis zwischen dem Partialdruck des Propylens und dem des Ethylens auf 10:1 bis 500:1, insbesondere auf 15:1 bis 100:1, eingestellt.

Das hierbei erhältliche Polypropylen bzw. Propylen-Copolymerisat wird nach Beendigung der Reaktion zusammen mit dem Katalysator aus der ersten Polymerisationsstufe ausgetragen und in die zweite Polymerisationsstufe eingeführt, wo diesem ein Gemisch von Propylen und Ethylen hinzupolymerisiert wird.

Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80 °C und die mittlere Verweilzeit des Polymerisats beträgt 1 bis 5 Stunden, bevorzugt 1,5 bis 4 Stunden.

In der zweiten Polymerisationsstufe liegt das Verhältnis der Partialdrücke zwischen Propylen und Ethylen im Bereich von 0,5:1 bis 5:1, insbesondere im Bereich von 1:1 bis 4:1. Vorzugsweise wird dabei das Gewichtsverhältnis zwischen den in der ersten und den in der zweiten Polymerisationsstufe umgesetzten Monomeren so bemessen, daß es in einem Bereich von 2,5:1 bis 20:1, bevorzugt im Bereich von 3:1 bis 15:1, liegt, wenn in der ersten Stufe Polypropylen erzeugt wurde. Für den Fall, daß in der ersten Stufe ein Propylen-Ethylen-Copolymerisat erzeugt wurde, liegt das Gewichtsverhältnis zwischen den in der ersten und den in der zweiten Polymerisationsstufe umgesetzten Monomeren bevorzugt im Bereich von 0,5:1 bis 20:1, insbesondere von 0,6:1 bis 10:1.

Weiterhin kann es vorteilhaft sein, dem Reaktionsgemisch der zweiten Polymerisationsstufe ein $C_1$- bis $C_8$-Alkanol, insbesondere ein $C_1$- bis $C_4$-Alkanol, hinzuzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten $C_1$- bis $C_8$-Alkanols wird dabei zweckmäßigerweise so bemessen, daß das Molverhältnis zwischen der Aluminiumverbindung und dem $C_1$- bis $C_8$-Alkanol 0,01:1 bis 10:1, insbesondere 0,02:1 bis 5:1 beträgt.

Das Molekulargewicht der dabei erhältlichen Polymerisate kann wie üblich durch Zugabe von Reglern, insbesondere von Wasserstoff kontrolliert werden. Weiterhin ist es möglich, Inertgase wie Stickstoff oder Argon mitzuverwenden. Die erhaltenen Copolymerisate können untergeordnete Anteile weiterer Alkene, i.a. $C_4$- bis $C_{10}$-Alk-1-ene, enthalten.

Die mittleren Molmassen der Copolymerisate liegen zwischen 10.000 bis 500.000, die Schmelzflußindices zwischen 0,1 bis 100 g/10 min, vorzugsweise zwischen 0,2 bis 10 g/10 min, jeweils gemessen nach DIN 53 735 bei 230 °C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird. Die erhaltenen Copolymerisate weisen neben einer guten Kerbschlagzähigkeit nur geringe Katalysatorrückstände und eine sehr niedrige Neigung zum Weißbruch auf. Aus verfahrenstechnischer Sicht ist es außerdem vorteilhaft, daß die Schüttdichten der aus der zweiten Polymerisationsstufe ausgetragenen Copolymerisate nicht niedriger sind als die aus der ersten Polymerisationsstufe erhaltenen Copolymerisate. Weitehin weisen die, in der ersten Polymerisationsstufe erzeugten Homo- oder Copolymerisate eine sehr gute Morphologie auf, d.h. wenig Feinanteile bei den Homopolymerisaten und wenig Grobkornanteile bei den Copolymerisaten. Wird in der ersten Stufe ein Homopolymerisat erzeugt, so zeigt das verwendete Katalysatorsystem bei hohem Propylen-Ethylen-Gehalt in der zweiten Stufe, ein sehr gutes Regelverhalten und ergibt in Gegenwart von Isopropanol ein hohes Rubberbildungspotential. Zudem nimmt die Belagbildung im Reaktor bei der zweiten Stufe deutlich ab.

Aufgrund ihrer guten mechanischen Eigenschaften eignen sich die Copolymerisate u.a. zur Herstellung von Folien, Rohren, Belägen, Fasern, Hohlkörpern, Spritzgußartikeln und Formteilen für den Fahrzeugbau.

## Beispiele

### Beispiel 1

a) Herstellung der titanhaltigen Feststoffkomponente

In einer ersten Stufe wurde $SiO_2$, das einen Teilchendurchmesser von 20 bis 45 µm, ein Porenvolumen von 1,7 ml/g und eine spezifische Oberfläche von 330 $m^2$/g aufwies, mit einer Lösung von n-Butyloctylmagnesium in n-Heptan versetzt, wobei pro Mol $SiO_2$ 0,3 Mol der Magnesiumverbindung eingesetzt wurden. Die Lösung wurde 45 Minuten bei 40 °C gerührt, danach auf 20 °C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80 °C gerührt und anschließend mit 7,2 Mol Titantetrachlorid und 0,3 Mol von in Ethylbenzol gelöstem Di-n-butylphthalat Jeweils bezogen auf 1 Mol Magnesium, versetzt. Anschließend wurde 1 Stunde bei 100 °C gerührt, der so erhaltene feste Stoff abfiltriert und mehrmals mit Ethylbenzol gewaschen.

Das daraus erhaltene Festprodukt extrahierte man 3 Stunden lang bei 125 °C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,6 Gew.-% Ti
7,7 Gew.-% Mg
24,9 Gew.-% Cl.

b) Vorpolymerisation der titanhaltigen Feststoffkomponente und anschließende Inaktivierung

In einem mit Rührer versehenen 1 1-Glasautoklaven wurden 700 ml n-Heptan vorgelegt und das Reaktionsgefäß auf eine Innentemperatur von 5°C abgekühlt. Zu dem Lösungsmittel wurden 47,4 ml Triethylaluminium (in Form einer 1,0-molaren Lösung in n-Heptan) und 1,3 ml Dimethoxyisobutylisopropylsilan (in Form einer 1,0-molaren Lösung in n-Heptan) zugegeben. Anschließend wurden 20 g der gemäß Beispiel 1a hergestellten titanhaltigen Feststoffkomponente zugegeben. Unter Rühren wurde dann kontinuierlich über ein Einleitungsrohr eine Stunde lang gasförmiges Propylen (Durchflußmenge: 40 l/h) bei einem Druck von 1 bar eingeleitet. Während der Propylenzufuhr wurde die Innentemperatur zwischen 5° und 20°C gehalten. Nach erfolgter Propylenzufuhr wurde dann kontinuierlich unter Rühren über ein Einleitungsrohr 1 h lang gasförmiges, trockenes $CO_2$ (Durchflußmenge: 14,5 l/h bei einem Druck von 1 bar) in die Katalysatorsuspension eingeleitet. Dadurch wurde die polymerisationsaktive Katalysatorsuspension inaktiviert.

Man erhielt 90 g eines Feststoffes, der 3,1 Gewichtsteile Polypropylen auf ein Gewichtsteil Katalysatorfeststoff enthielt.

c) Herstellung des Propylen-Ethylen-Copolymerisats

Die Herstellung des Propylen-Ethylen-Copolymerisats erfolgte in zwei hintereinander geschalteten Rührautoklaven mit einem Nutzvolumen von jeweils 180 l in Anwesenheit von Wasserstoff als Molekulargewichtsregler. Beide Reaktoren enthielten ein bewegtes Festbett aus feinteiligem Polypropylen.

In den ersten Polymerisationsreaktor wurde bei einem Druck von 32 bar und einer Temperatur von 80°C gasförmiges Propylen eingeleitet und dieses kontinuierlich mit Hilfe eines Ziegler-Natta-Katalysators polymerisiert. Dabei wurden pro Stunde 1 g der nach Beispiel 1b) hergestellten titanhaltigen Feststoffkomponente, 60 mmol Triethylaluminium und 6 mmol Dimethoxyisobutylisoproylsilan als Katalysatorbestandteile verwendet. Die mittlere Verweilzeit des Reaktionsgemisches betrug 3 Stunden. Bei diesem Verfahren wurden pro mmol der Aluminiumverbindung 0,4 kg Polypropylen erzeugt.

Das im ersten Reaktor gebildete Polypropylen wurde zusammen mit dem Katalysator in den zweiten Rührautoklaven übergeführt und dort dem Polymerisat bei einem Gesamtdruck von 15 bar, einer Temperatur von 70°C und einer mittleren Verweilzeit von 2,4 Stunden in Anwesenheit von 80 mmol Isopropanol ein Gemisch von Propylen und Ethylen hinzupolymerisiert. Das Verhältnis der Partialdrücke zwischen Propylen und Ethylen betrug dabei 2,3:1. Das Gewichtsverhältnis zwischen dem im ersten Reaktor gebildeten Polypropylen und dem im zweiten Reaktor entstandenen Copolymerisat lag bei 4,5:1. Bei der Polymerisation wurden im zweiten Reaktor pro mmol der Aluminiumkomponente 1,25 mmol Isopropanol verwendet.

Dabei erhielt man ein Propylen-Ethylen-Copolymerisat mit einem Schmelzflußindex von 2,7 g/10 min, bei 230°C und 2,16 kg (nach DIN 53 735). Die entsprechenden mechanischen Eigenschaften und die Kornverteilung des entstandenen Copolymerisats sind der nachstehenden Tabelle zu entnehmen. Der Chlorgehalt im Copolymerisat betrug 12 ppm.

## Beispiel 2

Entsprechend Beispiel 1 wurden mit Hilfe eines Ziegler-Natta-Katalysatorsystems Propylen und Ethylen polymerisiert, jedoch pro mmol der Aluminiumkomponente 1,33 mmol Isopropanol verwendet. Das Verhältnis der Partialdrücke zwischen Propylen und Ethylen betrug dabei 2,3:1. Das Gewichtsverhältnis zwischen dem im ersten Reaktor gebildeten Polypropylen und dem im zweiten Reaktor entstandenen Copolymerisat lag bei 4,5:1.

Dabei erhielt man ein Propylen-Ethylen-Copolymerisat mit einem Schmelzindex von 3,0 g/10 min, bei 230°C und 2,16 kg (nach DIN 53 735). Die entsprechenden mechanischen Eigenschaften und die Kornverteilung des entstandenen Copolymerisats sind der nachstehenden Tabelle zu entnehmen. Der Chlorgehalt im Copolymerisat betrug 10 ppm.

## Beispiel 3

Entsprechend Beispiel 1 wurden mit Hilfe eines Ziegler-Natta-Katalysatorsystems Propylen und Ethylen polymerisiert, jedoch pro mmol der Aluminiumkomponente 1,33 mmol Isopropanol verwendet. Im zweiten Reaktor erfolgte die Polymerisation bei einem Druck von 20 bar und bei einer Temperatur von 70°C. Das

Verhältnis der Partialdrücke zwischen Propylen und Ethylen betrug dabei 2,0:1. Das Gewichtsverhältnis zwischen dem im ersten Reaktor gebildeten Polypropylen und dem im zweiten Reaktor entstandenen Copolymerisat lag bei 1,4:1.

Dabei erhielt man ein Propylen-Ethylen-Copolymerisat mit einem Schmelzindex von 1,4 g/10 min, bei 230 °C und 2,16 kg (nach DIN 53 735). Die entsprechenden mechanischen Eigenschaften und die Kornverteilung des entstandenen Copolymerisats sind der nachstehenden Tabelle zu entnehmen. Der Chlorgehalt im Copolymerisat betrug 7 ppm.

Beispiel 4

Entsprechend Beispiel 3 wurde im ersten Reaktor Propylen polymerisiert und dieses zusammen mit dem Katalysator in den zweiten Reaktor überführt. Dort wurde dem Propylenhomopolymerisat bei einem Gesamtdruck von 20 bar, einer Temperatur von 70 °C und einer mittleren Verweilzeit von 2,4 Stunden ein Gemisch von Propylen und Ethylen hinzupolymerisiert. Das Verhältnis der Partialdrücke zwischen Propylen und Ethylen betrug dabei 2:1. Das Gewichtsverhältnis zwischen dem im ersten Reaktor gebildeten Polypropylen und dem im zweiten Reaktor entstandenen Copolymerisat lag bei 1,2:1.

Dabei erhielt man ein Propylen-Ethylen-Copolymerisat mit einem Schmelzflußindex von 1,3 g/10 min, bei 230 °C und 2,16 kg (nach DIN 53 735). Die entsprechenden mechanischen Eigenschaften und die Kornverteilung des entstandenen Copolymerisats sind der nachstehenden Tabelle zu entnehmen. Der Chlorgehalt im Copolymerisat betrug 8 ppm.

Vergleichsbeispiele V1 und V2

Analog zu Beispiel 1 wurden Propylen-Ethylen-Copolymerisate mit dem Katalysatorsystem gemäß Beispiel 1a) hergestellt; jedoch ohne Vorpolymerisation und ohne anschließender Inaktivierung, wie unter Beispiel 1b) beschrieben.

Die Reaktionsbedingungen und die Eigenschaften der Propylen-Ethylen-Copolymerisate sind der nachfolgenden Tabelle zu entnehmen.

Die Schmelzindices wurden bei 230 °C und 2,16 kg Belastung nach DIN 53 735 bestimmt, die Steifigkeiten (Schubmodul) nach DIN 53 455 und die Kerbschlagzähigkeiten nach DIN 53 453 bei -20 °C.

Tabelle

| | Beisp. 1 | Beisp. 2 | Beisp. 3 | Beisp. 4 | Vergl.-Bsp. V1 | Vergl.-Bsp. V2 |
|---|---|---|---|---|---|---|
| 1. Polymerisationsstufe:<br>Temperatur [°C]<br>Druck [bar] | 80<br>32 | 80<br>32 | 80<br>32 | 80<br>32 | 80<br>32 | 80<br>32 |
| 2. Polymerisationsstufe:<br>Temperatur [°C]<br>Druck [bar] | 70<br>15 | 70<br>15 | 70<br>20 | 70<br>20 | 70<br>15 | 70<br>20 |
| Gew.-Verhältnis Polypropylen (1. Stufe) zu Copolymerisat (2. Stufe) | 4,5:1 | 4,5:1 | 1,4:1 | 1,2:1 | 4,2:1 | 1,4:1 |
| Verhältnis Partialdrücke Propylen:Ethylen (2. Stufe) | 2,3:1 | 2,3:1 | 2,0:1 | 2,0:1 | 2,3:1 | 2,0:1 |
| Mol-Verhältnis Isopropanol:Aluminiumkomponente (2. Stufe) | 1,25:1 | 1,33:1 | 1,33:1 | 1,5:1 | 0,9:1 | 1,1:1 |

Tabelle (Forts.)

| | Beisp. 1 | Beisp. 2 | Beisp. 3 | Beisp. 4 | Vergl.-Bsp. V1 | Vergl.-Bsp. V2 |
|---|---|---|---|---|---|---|
| nach der 1. Stufe: | | | | | | |
| Schmelzindex [g/10 min] | 4,8 | 4,3 | 5,4 | 5,2 | 4,8 | 5,3 |
| Schüttdichte [g/l] | 410 | 400 | 420 | 400 | 400 | 400 |
| Feinanteile (Korndurchmesser <0,25 mm) [%] | 0,2 | 0,1 | 0,3 | 0,1 | 2,9 | 3,3 |
| nach der 2. Stufe: | | | | | | |
| Schmelzindex [g/10 min] | 2,7 | 3,0 | 1,4 | 1,3 | 2,8 | 1,4 |
| Schüttdichte [g/l] | 420 | 430 | 425 | 435 | 420 | 425 |
| Steifigkeit [N/mm$^2$] | 543 | 535 | 250 | 245 | 530 | 235 |
| Kerbschlagzähigkeit [kJ/min$^2$] | 7,3 | 6,5 | 0% Bruch | 0% Bruch | 6,7 | 0% Bruch |
| Laufzeit ohne Belagbildung [Tage] | - | - | >9 | >9 | - | <6 |
| Chlorgehalt [ppm] | 12 | 10 | 7 | 8 | 13 | 9 |

**Patentansprüche**

1. Verfahren zur Herstellung von Propylen-Ethylen-Copolymerisaten durch zweistufige Polymerisation aus der Gasphase heraus in einem bewegten Festbett, mittels eines Ziegler-Natta-Katalysatorsystems, das neben einer titanhaltigen Feststoffkomponente noch als Cokatalysator eine Aluminiumverbindung enthält, dadurch gekennzeichnet, daß man als Ziegler-Natta-Katalysatorsystem ein solches verwendet, das

nach Umsetzung der titanhaltigen Feststoffkomponente mit dem Cokatalysator einer Vorpolymerisation mit einem $\alpha$-Olefin unterworfen wird, bis ein Massenverhältnis von 0,1 bis 30 Teilen polymerisiertem $\alpha$-Olefin pro Teil Katalysator erreicht ist und anschließend das vorpolymerisierte Katalysatorsystem durch Reaktion mit Kohlendioxid inaktiviert wird.

**2.** Propylen-Ethylen-Copolymerisate, erhältlich nach einem Verfahren gemäß Anspruch 1.

**3.** Verwendung der Propylen-Ethylen-Copolymerisate gemäß Anspruch 2 zur Herstellung von Fasern, Folien und Formkörpern.

**4.** Fasern, Folien und Formkörper, hergestellt aus Propylen-Ethylen-Copolymerisaten gemäß Anspruch 2 als wesentliche Komponente.